# EUROPEAN PATENT SPECIFICATION

(11) **EP 3 835 143 B1**
(45) Date of publication and mention of the grant of the patent: **24.04.2024**
(21) Application number: 19214659.5
(22) Date of filing: 10.12.2019
(51) Int. Cl.: B60R 25/102, H04W 4/40, H04W 4/80, G08G 1/017, B60R 25/10

(54) **WIRELESS COMMUNICATION DEVICES, METHODS AND COMPUTER PROGRAMS**
DRAHTLOSE KOMMUNIKATIONSVORRICHTUNGEN, VERFAHREN UND COMPUTERPROGRAMME
DISPOSITIFS DE COMMUNICATION SANS FIL, PROCÉDÉS ET PROGRAMMES INFORMATIQUES

(43) Date of publication of application: 16.06.2021
(73) Proprietor: Bayerische Motoren Werke Aktiengesellschaft, 80809 München (DE)
(72) Inventor: Mourad, Alaa, 80807 München (DE)

(56) References cited:
- WO-A1-2014/095512
- WO-A1-2015/110454
- WO-A1-2017/085674
- WO-A1-2019/135373
- CN-A- 106 945 629
- US-B1- 10 363 904

## Description

### Field

Examples relate to a wireless communication device for a vehicle and to a wireless communication device for an external entity, and to corresponding methods and computer programs.

### Background

One vector of attack for breaking into some vehicles is directed at the keyless access system of some modern vehicles. In some cases, a device which can relay or replay the radio-frequency signal may be used for unlocking the car even in case the key fob is not near to the car. Furthermore, in some cases, the motor may be started if the replay device is mounted inside the car. Accordingly, in some circumstances, a car might be driven even if the key fob is not inside the car. A notification may be shown in the car that the key fob is not inside the car, however, it might not be possible to detect the condition from the outside, so from the outside, a detection that the car is stolen might not be possible, even if the car is driven without a key fob inside, so the police might not be able to determine that the car is stolen.

International patent application WO 2017/085674 A1 relates to a tracking and theft-recovery system for mobile assets, such as vehicles. In such a system, a tracking device is attached to a vehicle. If the tracking device is activated, it enters a "distressed mode", in which distress messages are transmitted via Bluetooth.

### Summary

There may be a desire for an improved concept for detecting stolen vehicles.

This desire is addressed by the subject-matter of the independent claims.

Embodiments of the present disclosure are based on the finding that wireless communication may be used to alert external entities, such as police cars or traffic control systems, of a theft of a vehicle. In particular, some wireless communication protocols support so-called "advertising packets", which are packets that are transmitted in order to announce the presence of a wireless communication device. These advertising packets may be received by other wireless communication devices without establishing a two-way communication link, so that a warning message that is transmitted via an advertising packet can be successfully received by any wireless communication device that is capable of receiving and decoding wireless messages according to the corresponding wireless communication protocol. One such wireless communication protocol is Bluetooth, e.g. Bluetooth Low Energy. Accordingly, in order to make it easy for the police to detect and identify a stolen car, Bluetooth Low Energy (BLE) could be used for car theft detection. BLE is used for different application in the car (e.g. in the head unit of the car). If the car detects that it is being driven without a valid key fob, an advertising packet, such as a BLE advertisement, may be used to transmit a warning message, which may be a special signal that is used to announce that the car may be stolen. This signal may be known, and detectable, by the police. The police may for example use a very simple wireless communication device, e.g. a BLE wireless communication device that is configured to check and filter/detect the advertising packet with the known structure. For example, such wireless communication devices may be mounted on main highways. Embodiments of the present disclosure may thus facilitate a detection of stolen cars using wireless communication, e.g. using Bluetooth Low Wnergy. Embodiments may for example be used with vehicles that provide a comfort access option, such as keyless entry or keyless go.

Embodiments of the present disclosure provide a wireless communication device for a vehicle. The wireless communication device comprises at least one transceiver module for communicating via a wireless communication protocol. The wireless communication device comprises a control module configured to detect an unauthorized operation of the vehicle. The control module is configured to transmit a warning message to at least one entity outside the vehicle via the at least one transceiver module using an advertising packet of the wireless communication protocol. By transmitting a wireless warning message regarding the unauthorized operation, entities outside the vehicle (i.e. the police) may be alerted of the unauthorized operation. By using an advertising packet, which requires no prior connection establishment, receiver devices may forgo connection establishment, which results in less delays in the transmission of the actual warning and which enables an implementation of receiver devices at a low complexity.

In at least some embodiments, the control module is configured to determine information on a presence of a wireless key device within the vehicle using the at least one transceiver module. The control module may be configured to detect the unauthorized operation of the vehicle based on the information on the presence of the wireless key device within the vehicle. For example, the transceiver module may be used to detect that no wireless key device is present within the vehicle.

For example, the control module may be configured to determine the information on the presence of the wireless key device within the vehicle via the at least one transceiver module using the wireless communication protocol. In other words, the same wireless communication protocol may be used for transmitting the warning message and determining the presence of wireless key devices.

Alternatively or additionally, the control module may be configured to determine the information on the presence of the wireless key device within the vehicle via the at least one transceiver module using a further wireless communication protocol. In other words, different wireless communication protocols may be used for transmitting the warning message and determining the presence of wireless key devices.

For example, the control module may be configured to determine the information on the presence of the wireless key device within the vehicle periodically. If a relay device is used, at some point, the relay device may be out of range of the wireless key device or of the vehicle. If the information on the presence of the wireless key device is determined periodically, this may be detected and used to detect the unauthorized operation of the vehicle.

Additionally or alternatively, the control module may be configured to determine the information on the presence of the wireless key device within the vehicle in response to an opening or closing of a window or door of the vehicle. Such events, at which wireless key devices may be removed from the vehicle, may be used to detect the unauthorized operation of the vehicle, e.g. after a time offset.

In at least some embodiments, the wireless communication device is a Bluetooth-based wireless communication protocol. For example, the Bluetooth-based wireless communication protocol may be a Bluetooth Low Energy wireless communication protocol. Bluetooth (Low Energy) may be used for different functionalities within a vehicle, and may thus be re-purposed for transmitting the warning message without requiring additional hardware.

In some embodiments, the control module may be configured to transmit the warning message to the at least one entity using a long-range communication mode of the wireless communication protocol. This may extend the range, at which the warning message can be reliably received.

For example, the long-range communication mode may be a coded communication mode of a Bluetooth-based wireless communication protocol. The coded communication mode may use a plurality of symbols to represent a single bit (e.g. 2, 4 or 8), which may increase the reliability of the transmission over long distances.

In some embodiments, the advertisement may comprise information that is suitable for identifying the vehicle, such as a vehicle identification number (VIN), a license plate, a color and build of the vehicle, and/or a current location of the vehicle. This may facilitate the tracking of stolen cars for the police. Accordingly, the warning message may comprise identification information for identifying the vehicle.

Embodiments of the present disclosure further provide a vehicle comprising such a wireless communication device. The wireless communication device may be used by the vehicle to warn an external entity that an unauthorized operation of the vehicle is occurring.

Embodiments of the present disclosure further provide a wireless communication device for an external entity (i.e. an entity that is external to a vehicle). The wireless communication device comprises a receiver module for receiving wireless messages via a wireless communication protocol. The wireless communication device comprises a control module configured to receive a warning message from a wireless communication device of a vehicle via the receiver module. The warning message is received via an advertising packet of the wireless communication protocol. The control module is configured to provide an indication related to an unauthorized operation of the vehicle via an output module based on the received warning message. Such a wireless communication device may be used to detect vehicles that are operated in an unauthorized manner.

Embodiments of the present disclosure further provide a method for a wireless communication device of a vehicle. The method comprises detecting an unauthorized operation of the vehicle. The method comprises transmitting a warning message to at least one entity outside the vehicle via a transceiver module using an advertising packet of a wireless communication protocol.

Embodiments of the present disclosure further provide a method for a wireless communication device of an external entity. The method comprises receiving a warning message from a wireless communication device of a vehicle via a receiver module. The warning message is received via an advertising packet of a wireless communication protocol. The method comprises providing an indication related to an unauthorized operation of the vehicle via an output module based on the received warning message.

Embodiments of the present disclosure further provide a computer program having a program code for performing at least one of the methods, when the computer program is executed on a computer, a processor, or a programmable hardware component.

### Brief description of the Figures

Some examples of apparatuses and/or methods will be described in the following by way of example only, and with reference to the accompanying figures, in which
Fig. 1a shows a block diagram of an embodiment of a wireless communication device for a vehicle;
Fig. 1b shows a flow chart of an embodiment of a method for a wireless communication device of a vehicle;
Fig. 2a shows a block diagram of an embodiment of a wireless communication device for an external entity; and
Fig. 2b shows a flow chart of an embodiment of a method for a wireless communication device of an external entity.

### Detailed Description

Various examples will now be described more fully with reference to the accompanying drawings in which some examples are illustrated.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality.

Unless otherwise defined, all terms (including technical and scientific terms) are used herein in their ordinary meaning of the art to which the examples belong.

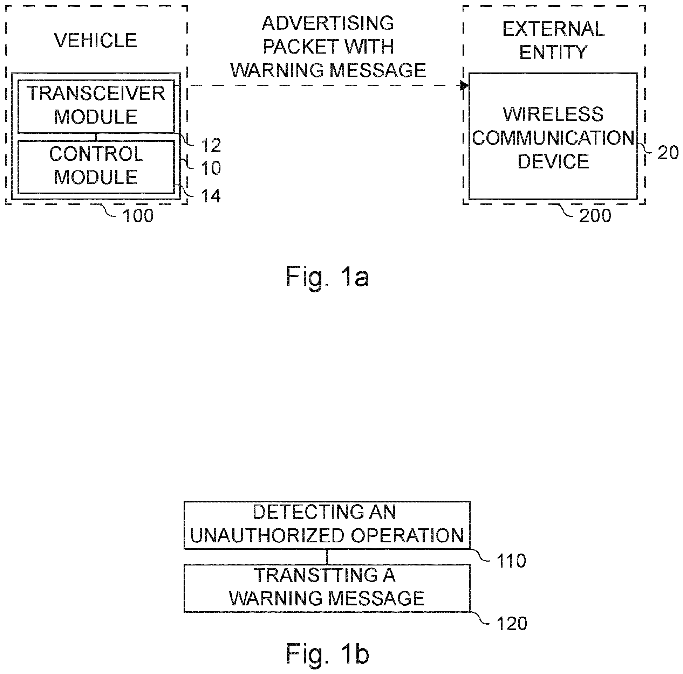

Fig. 1a shows a block diagram of an embodiment of a wireless communication device 10 for a vehicle 100. Fig. 1 further shows the vehicle 100 comprising the wireless communication device 10. The wireless communication device 10 comprises at least one transceiver module 12 for communicating via a wireless communication protocol. The wireless communication device 10 comprises a control module 14 that is coupled to the transceiver module 12. For example, the control module 14 is configured to control the transceiver module 12. The control module 14 is configured to detect an unauthorized operation of the vehicle. The control module 14 is configured to transmit a warning message to at least one entity outside the vehicle via the at least one transceiver module using an advertising packet of the wireless communication protocol.

Fig. 1b shows a flow chart of an embodiment of a corresponding method for a wireless communication device of a vehicle. Although some aspects are described in the context of an apparatus, it is clear that these aspects also represent a description of the corresponding method, where a block or device corresponds to a method step or a feature of a method step. For example, the method may comprise features being provided by the control module 14 of the wireless communication device 10, e.g. features that are provided in conjunction with the transceiver module 12. The method comprises detecting 110 an unauthorized operation of the vehicle. The method comprises transmitting 120 a warning message to at least one entity outside the vehicle via a transceiver module using an advertising packet of a wireless communication protocol. For example, the method may be executed by the vehicle 100, e.g. by the wireless communication device 10 for the vehicle 100.

The following description relates to both the wireless communication device 10 or vehicle 100 of Fig. 1a and to the method of Fig. 1b.

At least some embodiments of the present disclosure relate to a wireless communication device for a vehicle, and to a corresponding method and computer program. As laid out above, embodiments are based on the finding that malicious actors may use diverse means to overcome the security mechanisms in order to gain entry to a vehicle and/or in order to activate the engine of the vehicle. Such means may be detectable after the access has been gained - for example, if a relay device has been used, the unauthorized operation may be detected once the relay device or the key vehicle providing the transmissions that are relayed by the relay device are out of range of the vehicle. If a replay device is used, as soon as the code being used changes, an unauthorized operation may be detected. In the context of this application, the unauthorized operation of the vehicle may refer to an unauthorized access to the vehicle (i.e. the vehicle has been unlocked without authorization of a rightful owner of the vehicle), to an unauthorized operation of an engine of the vehicle (i.e. the engine has been started without authorization of the rightful owner of the vehicle), and/or to an unauthorized driving of the vehicle (i.e. a lock-out that prevents driving of the vehicle has been circumvented without authorization of the rightful owner of the vehicle).

There are different approaches for detecting the unauthorized operation of the vehicle. For example, one or more security subsystems of the vehicle may be used for detecting the unauthorized operation of the vehicle, e.g. an engine immobilizer subsystem or a key access subsystem. Furthermore, sensors, such as video or audio sensors may be used to analyze the occupants of the vehicle. In some embodiments, however, the transceiver module may be used to determine whether an unauthorized operation of the vehicle occurs or occurred. For example, the transceiver module may be used to determine information on a presence of a wireless key device within the vehicle. In other words, the control module 14 may be configured to determine information on a presence of a wireless key device within the vehicle using the at least one transceiver module. In the context of this application, a wireless key device may be a wireless key fob, or a mobile device (such as a smartphone or smartwatch) comprising key information and being configured to provide wireless key functionality. The information on the presence of the wireless key device within the vehicle may indicate whether a wireless key device is deemed to be present within the vehicle, i.e. whether sufficient evidence has been found to conclude that a wireless key device is present within the vehicle. The control module may be configured to detect the unauthorized operation of the vehicle based on the information on the presence of the wireless key device within the vehicle. For example, the control module may be configured to detect an unauthorized operation of the vehicle if the information on the presence of the wireless key device within the vehicle indicates that no wireless key device is present within the vehicle (e.g. during the operation of the vehicle).

The same wireless communication protocol is used to transmit the warning message (i.e. the advertising packet comprising the warning message) and to determine the information on the presence of the wireless key device within the vehicle. In other words, the control module 14 may be configured to determine the information on the presence of the wireless key device within the vehicle via the at least one transceiver module using the wireless communication protocol. For example, Bluetooth Low Energy may be used both for the transmission of the warning message and for the determination of the information on the presence of the wireless key device within the vehicle. For example, the control module 14 may be configured to attempt a communication with the wireless key device via the wireless communication protocol, or to listen for wireless transmissions of the wireless key device using the wireless communication protocol, and to determine the information on the presence of the wireless key device based on the attempted communication or based on the (lack of) received wireless transmissions of the wireless key device.

Alternatively, but not claimed, a different wireless communication protocol may be used to determine the information on the presence of the wireless key device within the vehicle. In other words, the control module 14 may be configured to determine the information on the presence of the wireless key device within the vehicle via the at least one transceiver module using a further wireless communication protocol. For example, the further wireless communication protocol may be different from the wireless communication protocol. For example, the further wireless communication protocol may be an Ultra-Wide-Band (UWB) communication protocol. In other words, the control module 14 may be configured to determine the information on the presence of the wireless key device within the vehicle via the at least one transceiver module using UWB communication. For example, the control module 14 may be configured to perform response time measurements with the wireless key device via UWB in order to determine the information on the presence of the wireless key device within the vehicle. Alternatively, a proprietary low-frequency (i.e. in the range of 30 kHz to 300 kHz)-based or radiofrequency-based wireless communication protocol may be used between the wireless key device and the vehicle. Accordingly, the further wireless communication protocol may be a proprietary low-frequency (i.e. in the range of 30 kHz to 300 kHz)-based or radio-frequency-based wireless communication protocol.

This detection may be performed periodically, e.g. every few seconds or minutes, or based on an event, e.g. whenever a window or door has been closed or opened. In other words, the control module 14 may be configured to determine the information on the presence of the wireless key device within the vehicle periodically, e.g. every second, every ten seconds, every minute, every five minutes etc. Alternatively or additionally, the control module 14 may be configured to determine the information on the presence of the wireless key device within the vehicle in response to an opening or closing of a window or door of the vehicle. Accordingly, the control module 14 may be configured to determine the operating or closing of a window or door of the vehicle. The information on the presence of the wireless key device may be determined when the window or door of the vehicle is opened or closed, i.e. directly triggered by the opening or closing, or a delay may be used after the opening or closing of the window or door of the vehicle. For example, if a wireless key device is taken out of a vehicle, it might still be determined to be present within the vehicle when the window or door is opened or closed, as it is in close proximity to the vehicle at that time. By introducing a delay, such as 30 seconds or a minute, a subsequent determination of the information on the presence may be determined whether the wireless key device has been removed from the vehicle at the opening or closing of the door.

Once an unauthorized operation of the vehicle is detected, the transmission of the warning message (i.e. of the advertising packet comprising the warning message) may be performed. In other words, the transmission of the warning message may be triggered by the detection of the unauthorized operation of the vehicle. For example, the warning message may indicate that the vehicle is being operated without authorization, i.e. that the vehicle has been stolen.

Embodiments are based on the transmission of the warning message using an advertising packet (or advertisement packet) of the wireless communication protocol. In some wireless communication systems, such as in wireless communication via Bluetooth, communication is initiated via so-called "advertising packets", which are packets which are (usually periodically) transmitted by a wireless communication device that wishes to be perceived by other wireless communication devices in its vicinity. When one of the other wireless communication devices receives such an advertising packet, it may choose to establish (i.e. to initiate) a connection to the wireless communication device that has transmitted the advertising packet. Advertising packets have the advantage that they require no prior communication between transmitting wireless communication device and receiving wireless communication device - i.e., each wireless communication device may successfully receive and decode an advertising packet. In embodiments, the advertising packet of the wireless communication protocol are used to broadcast the warning message without requiring a pre-existing communication link between the wireless communication device and the external entity.

One wireless communication protocol that uses advertising packets is the Bluetooth wireless communication protocol and its variants, such as Bluetooth Low Energy. Accordingly, the wireless communication device may be a Bluetooth-based wireless communication protocol, e.g. a Bluetooth Low Energy wireless communication protocol. In other wireless communication protocol, different nomenclatures may be used for advertising packets. For example, in Wi-Fi (Institute of Electrical and Electronics Engineers, IEEE, standard 802.11), beacon frames are used to transmit information about the wireless network. Such beacon frames may be considered advertising packets.

Some wireless communication protocols support short-range communication modes and long-range communication modes. For example, In the Bluetooth 5.0 specification, a long-range communication mode was added to the Bluetooth LE standard, a so-called "coded" communication mode. The term "coded" was chosen, as the bits transmitted in this communication mode are represented by two or eight symbols, such that a code is added on top of the existing symbols. This communication mode is implemented by two physical layer implementations that are denoted LE coded S=2 (two symbols per bit, having a maximal transmission rate of 512 kilobit/s) and LE coded S=8 (eight symbols per bit, having a maximal transmission rate of 128 kilobit/s). The short-range communication mode, denoted "uncoded" communication mode, is implemented by two other physical layer implementations, LE 1M (having a maximal transmission bit rate of 1 Megabit/s) and LE 2M (having a maximal transmission bit rate of 2 Megabit/s). In some embodiments, the long-range communication mode may be a coded communication mode of the Bluetooth (LE) communication protocol and the short-range communication mode may be an uncoded communication mode of the Bluetooth (LE) communication protocol. The control module 14 may be configured to transmit the warning message to the at least one entity using a long-range communication mode of the wireless communication protocol. For example, if the wireless communication protocol is a Bluetooth-based wireless communication protocol, the long-range communication mode may be a coded communication mode of the Bluetooth-based wireless communication protocol.

In at least some embodiments, the warning message may be transmitted within a (single) advertising packet. In other words, the advertising packet comprises the warning message. Each advertising packet may comprise the entire warning message. Advertising packets often have only a limited amount of "space" (i.e. bits that can be assigned to arbitrary data"). Therefore, the warning message may be included in encoded form. For example, the warning message may be a bit string having two or more sections representing different information. For example, the warning message may comprise a section that indicates that the advertising packet comprises a warning message. Furthermore, the warning message may comprise a section that comprises identification information for identifying the vehicle. In other words, the warning message may comprise identification information for identifying the vehicle. For example, the identification information may comprise at least one of a vehicle identification number of the vehicle, a license plate identifier of the vehicle, a (coded) color of the vehicle, a (coded) build of the vehicle, and a (coded) manufacturer of the vehicle. Furthermore, the advertising packet may comprise an identification information about the wireless communication device (e.g. a Media Access Control address).

In general, advertising packets are transmitted periodically, e.g. to enable other wireless communication devices to discover the wireless communication protocol transmitting the advertising packets. Accordingly, the control module may be configured to periodically (i.e. every 10 ms, every 20 ms, every 50 ms, every 100 ms, or every 200 ms) transmit the warning message using an advertising packet. While unauthorized operation of the vehicle is detected, every advertising packet transmitted by the wireless communication device may comprise the warning message. Alternatively, only a subset of advertising packet transmitted by the wireless communication device may comprise the warning message.

The warning message is transmitted to the external entity 200. In embodiments, the external entity may be characterized by being external to the vehicle 100. In some cases, the external entity may be a static external entity, e.g. a communication node being placed at the side of the road, which may relay the warning message to another entity. In some cases, the external entity may be a mobile external entity, e.g. another vehicle, such as a police vehicle.

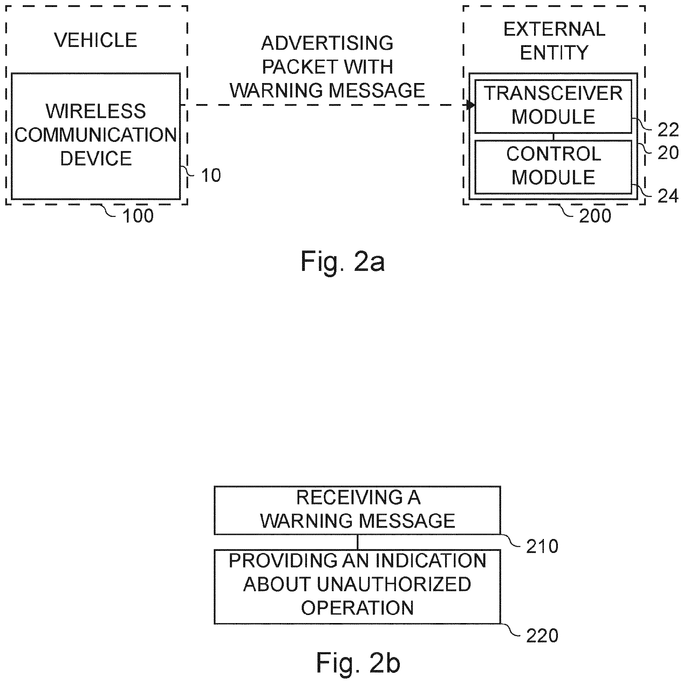

In general, the wireless communication device 10, and/or a further wireless communication device 20 of Fig. 2a, may be wireless communication devices that are used by other devices, e.g. communication chipsets that are used by a mobile device, a computer system or a vehicle to communicate via a wireless communication protocol, such as Bluetooth. For example, the wireless communication device 10, and/or the further wireless communication device 20, may be Bluetooth (LE) chipsets. In some embodiments, the wireless communication device 10, and/or the further wireless communication device 20, may be part of a wireless communication chipset, e.g. a combined Wi-Fi/Bluetooth chipset.

The transceiver module 12 (and/or a receiver module 22 shown in connection with the wireless communication device of Fig. 2a) may be implemented as any means for transceiving, i.e. receiving and/or transmitting etc., one or more transceiver units, one or more transceiver devices and it may comprise typical receiver and/or transmitter components, such as one or more elements of the group of one or more Low-Noise Amplifiers (LNAs), one or more Power Amplifiers (PAs), one or more filters or filter circuitry, one or more diplexers, one or more duplexers, one or more Analog-to-Digital converters (A/D), one or more Digital-to-Analog converters (D/A), one or more modulators or demodulators, one or more mixers, one or more antennas, etc. In at least some embodiments, the transceiver module is configured to communicate via the wireless communication protocol and/or via the further wireless communication protocol.

In embodiments the control module 14 (and/or a control module 24 shown in connection with the wireless communication device of Fig. 2a) may be implemented using one or more processing units, one or more processing devices, any means for processing, such as a processor, a computer or a programmable hardware component being operable with accordingly adapted software. In other words, the described function of the control module 14; 24 may as well be implemented in software, which is then executed on one or more programmable hardware components. Such hardware components may comprise a general-purpose processor, a Digital Signal Processor (DSP), a micro-controller, etc.

For example, the vehicle 100 may be a land vehicle, a road vehicle, a car, an automobile, an off-road vehicle, a motor vehicle, a truck or a lorry. The external entity 200 may be a one of a police car, a police communication node, and a roadside communication node.

Fig. 2a shows a block diagram of an embodiment of a wireless communication device 20 for an external entity. Fig. 2a further shows the external entity 200 comprising the wireless communication device 20. The wireless communication device 20 comprises a receiver module 22 for receiving wireless messages via a wireless communication protocol. The wireless communication device comprises a control module 24 that is coupled to the transceiver module 22. For example, the control module 24 is configured to control the receiver module 22. The control module 24 is configured to receive a warning message from a wireless communication device of a vehicle via the receiver module. The warning message is received via an advertising packet of the wireless communication protocol. The control module 24 is configured to provide an indication related to an unauthorized operation of the vehicle via an output module based on the received warning message.

Fig. 2b shows a flow chart of an embodiment of a corresponding method for a wireless communication device 20 of an external entity 200. Although some aspects will be described in the context of an apparatus, it is clear that these aspects also represent a description of the corresponding method, where a block or device corresponds to a method step or a feature of a method step. For example, the method may comprise features being provided by the control module 24 of the wireless communication device 20, e.g. features that are provided in conjunction with the transceiver module 22. Accordingly, the method comprises receiving 210 a warning message from a wireless communication device of a vehicle via a receiver module. The warning message being received via an advertising packet of a wireless communication protocol. The method comprises providing 220 an indication related to an unauthorized operation of the vehicle via an output module based on the received warning message.

The following description relates both to the wireless communication device and external entity of Fig. 2a and to the corresponding method of fig. 2b.

At least some embodiments relate to a wireless communication device for an external entity and to a corresponding method and computer program. In Figs. 1a and 1b, embodiments were shown of a wireless communication device for a vehicle and corresponding methods and computer programs that use an advertising packet to provide a warning message to an external entity if an unauthorized operation of the vehicle is detected. The wireless communication device, method and computer program of Fig. 2a and 2b provide the counterpart - they may be used to receive the warning message via the advertisement packet, and to provide an indication via an output module. Such an output module may be placed within a police vehicle or within a police station, alerting the police of a (potential) theft or misappropriation of the vehicle.

The control module is configured to receive the warning message (i.e. the advertising packet comprising the warning message) via the receiver module. In some embodiments, a communication between the wireless communication device 20 and the wireless communication device 10 of the vehicle may be established. In this case, the receiver module 22 may be a transceiver module (i.e. as introduced in connection with Fig. 2a). Else, a (non-transceiver) receiver module may suffice. In any case, a transceiver module may be used even if no communication is established.

The control module 24 is configured to receive the warning message from the wireless communication device 10 via an advertising packet (i.e. within or as an advertising packet) of the wireless communication protocol. In other words, the control module 24 may be configured to receive an advertising packet comprising the warning message. For example, the control module may be configured to scan received (advertising) packets for the warning message. For example, the warning message may comprise a section indicating the presence of a warning message (within the advertising packet). The control module 24 may be configured to detect the section indicating the presence of a warning message, and to extract the warning message from the received advertising packet upon detection of the section indicating the presence of a warning message.

The control module is further configured to provide the indication related to the unauthorized operation of the vehicle via an output module based on the received warning message. For example, the control module may be configured to provide the indication related to the unauthorized operation of the vehicle if a received advertising packet comprises the warning message. In at least some embodiments, the warning message indicates that the vehicle is being operated without authorization. The control module may be configured to provide the indication related to the unauthorized operation of the vehicle if a warning message that is received via an advertising packet indicates that the vehicle is being operated without authorization.

The control module 24 is configured to provide the indication related to the unauthorized operation of the vehicle via the output module. In general, the output module may be a module for providing the indication related to the unauthorized operation of the vehicle to a (human) user, e.g. to a policeman. In embodiments, the output module may be one of a display or an audio output module. In some embodiments, the wireless communication device may comprise the output module. Alternatively, the wireless communication device may comprise an interface for providing the indication to the output module, in order to output the indication via the output module. For example, the indication related to the unauthorized operation of the vehicle may be provided via an output module of a computer, of a mobile device or of a vehicle, e.g. via a display of a mobile device, of a computer or of a vehicle.

More details and aspects of the wireless communication device 20, the external entity 200 and of the corresponding method are mentioned in connection with the proposed concept or one or more examples described above (e.g. Fig. 1a and/or 1b). The wireless communication device 20, the external entity 200 and of the corresponding method may comprise one or more additional optional features corresponding to one or more aspects of the proposed concept or one or more examples described above or below.

The transceiver module 22 may be implemented as any means for receiving, one or more receiver units, one or more receiver devices and it may comprise typical receiver components, such as one or more elements of the group of one or more Low-Noise Amplifiers (LNAs), one or more Power Amplifiers (PAs), one or more filters or filter circuitry, one or more diplexers, one or more duplexers, one or more Analog-to-Digital converters (A/D), one or more Digital-to-Analog converters (D/A), one or more demodulators, one or more mixers, one or more antennas, etc.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

## Claims

1. A wireless communication device (10) for a vehicle (100), the wireless communication device comprising:
at least one transceiver module (12) for communicating via a wireless communication protocol; and
a control module (14) configured to:
detect an unauthorized operation of the vehicle, and
transmit a warning message to at least one entity outside the vehicle via the at least one transceiver module using an advertising packet of the wireless communication protocol, wherein the advertising packet comprises the warning message,
wherein the control module (14) is configured to determine information on a presence of a wireless key device within the vehicle using the at least one transceiver module, and to detect the unauthorized operation of the vehicle based on the information on the presence of the wireless key device within the vehicle, and
wherein the control module (14) is configured to determine the information on the presence of the wireless key device within the vehicle via the at least one transceiver module using the same wireless communication protocol.

2. The wireless communication device according to claim 1, wherein the control module (14) is configured to determine the information on the presence of the wireless key device within the vehicle via the at least one transceiver module using a further wireless communication protocol.

3. The wireless communication device according to one of the claims 1 to 2, wherein the control module (14) is configured to determine the information on the presence of the wireless key device within the vehicle periodically,
and/or wherein the control module (14) is configured to determine the information on the presence of the wireless key device within the vehicle in response to an opening or closing of a window or door of the vehicle.

4. The wireless communication device according to one of the claims 1 to 3, wherein the wireless communication device is a Bluetooth-based wireless communication protocol.

5. The wireless communication device according to claim 4, wherein the Bluetooth-based wireless communication protocol is a Bluetooth Low Energy wireless communication protocol.

6. The wireless communication device according to one of the claims 1 to 5, wherein the control module (14) is configured to transmit the warning message to the at least one entity using a long-range communication mode of the wireless communication protocol.

7. The wireless communication device according to claim 6, wherein the long-range communication mode is a coded communication mode of a Bluetooth-based wireless communication protocol.

8. The wireless communication device according to one of the claims 1 to 7, wherein the warning message comprises identification information for identifying the vehicle.

9. A vehicle comprising the wireless communication device according to one of the claims 1 to 8.

10. A wireless communication system, the system comprising: a wireless communication device (20) for an external entity (200), the wireless communication device comprising:
a receiver module (22) for receiving wireless messages via a wireless communication protocol; and
a control module (24) configured to:
receive a warning message from a wireless communication device of a vehicle via the receiver module, the warning message being received via an advertising packet of the wireless communication protocol, wherein the advertising packet comprises the warning message, and
provide an indication related to an unauthorized operation of the vehicle via an output module based on the received warning message,
wherein the control module (14) is configured to determine information on a presence of a wireless key device within the vehicle using the at least one transceiver module, and to detect the unauthorized operation of the vehicle based on the information on the presence of the wireless key device within the vehicle,
wherein the control module (14) is configured to determine the information on the presence of the wireless key device within the vehicle via the at least one transceiver module using the same wireless communication protocol.

11. A method for a wireless communication device (10) of a vehicle (100), the method comprising:
detecting (110) an unauthorized operation of the vehicle;
transmitting (120) a warning message to at least one entity outside the vehicle via a transceiver module using an advertising packet of a wireless communication protocol,
wherein the advertising packet comprises the warning message;
determining information on a presence of a wireless key device within the vehicle using the at least one transceiver module, and to detect the unauthorized operation of the vehicle based on the information on the presence of the wireless key device within the vehicle; and
determining the information on the presence of the wireless key device within the vehicle via the at least one transceiver module using the same wireless communication protocol.

12. A method for a wireless communication system comprising a wireless communication device (20) of an external entity (200), the method comprising:
receiving (210) a warning message from a wireless communication device of a vehicle via a receiver module, the warning message being received via an advertising packet of a wireless communication protocol, wherein the advertising packet comprises the warning message; and
providing (220) an indication related to an unauthorized operation of the vehicle via an output module based on the received warning message;
determining information on a presence of a wireless key device within the vehicle using the at least one transceiver module, and to detect the unauthorized operation of the vehicle based on the information on the presence of the wireless key device within the vehicle; and
determining the information on the presence of the wireless key device within the vehicle via the at least one transceiver module using the same wireless communication protocol.

13. A computer program having a program code for performing at least one of the methods of one of the claims 11 or 12, when the computer program is executed on a computer, a processor, or a programmable hardware component.

## Patentansprüche

1. Drahtloskommunikationsvorrichtung (10) für ein Fahrzeug (100), wobei die Drahtloskommunikationsvorrichtung Folgendes umfasst:
mindestens ein Sende-/Empfangsmodul (12) zum Kommunizieren mittels eines Drahtloskommunikationsprotokolls und
ein Steuermodul (14), das konfiguriert ist zum:
Detektieren eines unberechtigten Betriebs des Fahrzeugs und
Senden einer Warnnachricht zu mindestens einer Einheit außerhalb des Fahrzeugs mittels des mindestens einen Sende-/Empfangsmoduls unter Verwendung eines Anzeigepakets des Drahtloskommunikationsprotokolls, wobei das Anzeigepaket die Warnnachricht umfasst,
wobei das Steuermodul (14) konfiguriert ist, Informationen über ein Vorhandensein einer Drahtlosschlüsselvorrichtung im Fahrzeug unter Verwendung des mindestens einen Sende-/Empfangsmoduls zu bestimmen und den unberechtigten Betrieb des Fahrzeugs auf der Grundlage der Informationen über das Vorhandensein der Drahtlosschlüsselvorrichtung im Fahrzeug zu detektieren, und
das Steuermodul (14) konfiguriert ist, die Informationen über das Vorhandensein der Drahtlosschlüsselvorrichtung im Fahrzeug mittels des mindestens einen Sende-/Empfangsmoduls unter Verwendung desselben Drahtloskommunikationsprotokolls zu bestimmen.

2. Drahtloskommunikationsvorrichtung nach Anspruch 1, wobei das Steuermodul (14) konfiguriert ist, die Informationen über das Vorhandensein der Drahtlosschlüsselvorrichtung im Fahrzeug mittels des mindestens einen Sende-/Empfangsmoduls unter Verwendung eines weiteren Drahtloskommunikationsprotokolls zu bestimmen.

3. Drahtloskommunikationsvorrichtung nach einem der Ansprüche 1 bis 2, wobei das Steuermodul (14) konfiguriert ist, die Informationen über das Vorhandensein der Drahtlosschlüsselvorrichtung im Fahrzeug in regelmäßigen Abständen zu bestimmen, und/oder das Steuermodul (14) konfiguriert ist, die Informationen über das Vorhandensein der Drahtlosschlüsselvorrichtung im Fahrzeug in Reaktion auf ein Öffnen oder ein Schließen eines Fensters oder einer Tür des Fahrzeugs zu bestimmen.

4. Drahtloskommunikationsvorrichtung nach einem der Ansprüche 1 bis 3, wobei die Drahtloskommunikationsvorrichtung ein Bluetoothbasiertes Drahtloskommunikationsprotokoll ist.

5. Drahtloskommunikationsvorrichtung nach Anspruch 4, wobei das Bluetooth-basierte Drahtloskommunikationsprotokoll ein Bluetooth-Niedrigenergie-Drahtloskommunikationsprotokoll ist.

6. Drahtloskommunikationsvorrichtung nach einem der Ansprüche 1 bis 5, wobei das Steuermodul (14) konfiguriert ist, die Warnnachricht zu der mindestens einen Einheit unter Verwendung eines langreichweitigen Kommunikationsmodus des Drahtloskommunikationsprotokolls zu senden.

7. Drahtloskommunikationsvorrichtung nach Anspruch 6, wobei der langreichweitige Kommunikationsmodus ein codierter Kommunikationsmodus eines Bluetooth-basierten Drahtloskommunikationsprotokolls ist.

8. Drahtloskommunikationsvorrichtung nach einem der Ansprüche 1 bis 7, wobei die Warnnachricht Identifizierungsinformationen zum Identifizieren des Fahrzeugs umfasst.

9. Fahrzeug, das die Drahtloskommunikationsvorrichtung nach einem der Ansprüche 1 bis 8 umfasst.

10. Drahtloskommunikationssystem, wobei das System Folgendes umfasst: eine Drahtloskommunikationsvorrichtung (20) für eine externe Einheit (200), wobei die Drahtloskommunikationsvorrichtung Folgendes umfasst:
ein Empfängermodul (22) zum Empfangen von Drahtlosnachrichten mittels eines Drahtloskommunikationsprotokolls; und
ein Steuermodul (24), das konfiguriert ist zum:
Empfangen einer Warnnachricht von einer Drahtloskommunikationsvorrichtung eines Fahrzeugs mittels des Empfängermoduls, wobei die Warnnachricht mittels eines Anzeigepakets des Drahtloskommunikationsprotokolls empfangen wird und das Anzeigepaket die Warnnachricht umfasst, und
Bereitstellen einer Angabe, die mit einem unberechtigten Betrieb des Fahrzeugs in Beziehung steht, mittels eines Ausgabemoduls auf der Grundlage der empfangenen Warnnachricht,
wobei das Steuermodul (14) konfiguriert ist, Informationen über ein Vorhandensein einer Drahtlosschlüsselvorrichtung im Fahrzeug unter Verwendung des mindestens einen Sende-/Empfangsmoduls zu bestimmen und den unberechtigten Betrieb des Fahrzeugs auf der Grundlage der Informationen über das Vorhandensein der Drahtlosschlüsselvorrichtung im Fahrzeug zu detektieren,
das Steuermodul (14) konfiguriert ist, die Informationen über das Vorhandensein der Drahtlosschlüsselvorrichtung im Fahrzeug mittels des mindestens einen Sende-/Empfangsmoduls unter Verwendung desselben Drahtloskommunikationsprotokolls zu bestimmen.

11. Verfahren für eine Drahtloskommunikationsvorrichtung (10) eines Fahrzeugs (100), wobei das Verfahren Folgendes umfasst:
Detektieren (110) eines unberechtigten Betriebs des Fahrzeugs;
Senden (120) einer Warnnachricht zu mindestens einer Einheit außerhalb des Fahrzeugs mittels eines Sende-/Empfangsmoduls unter Verwendung eines Anzeigepakets eines Drahtloskommunikationsprotokolls, wobei das Anzeigepaket die Warnnachricht umfasst;
Bestimmen von Informationen über ein Vorhandensein einer Drahtlosschlüsselvorrichtung im Fahrzeug unter Verwendung des mindestens einen Sende-/Empfangsmoduls und Detektieren des unberechtigten Betriebs des Fahrzeugs auf der Grundlage der Informationen über das Vorhandensein der Drahtlosschlüsselvorrichtung im Fahrzeug; und
Bestimmen der Informationen über das Vorhandensein der Drahtlosschlüsselvorrichtung im Fahrzeug mittels des mindestens einen Sende-/Empfangsmoduls unter Verwendung desselben Drahtloskommunikationsprotokolls.

12. Verfahren für ein Drahtloskommunikationssystem, das eine Drahtloskommunikationsvorrichtung (20) einer externen Einheit (200) umfasst, wobei das Verfahren Folgendes umfasst:
Empfangen (210) einer Warnnachricht von einer Drahtloskommunikationsvorrichtung eines Fahrzeugs mittels eines Empfängermoduls, wobei die Warnnachricht mittels eines Anzeigepakets eines Drahtloskommunikationsprotokolls empfangen wird und das Anzeigepaket die Warnnachricht umfasst; und
Bereitstellen (220) einer Angabe, die mit einem unberechtigten Betrieb des Fahrzeugs in Beziehung steht, mittels eines Ausgabemoduls auf der Grundlage der empfangenen Warnnachricht;
Bestimmen von Informationen über ein Vorhandensein einer Drahtlosschlüsselvorrichtung im Fahrzeug unter Verwendung des mindestens einen Sende-/Empfangsmoduls und Detektieren des unberechtigten Betriebs des Fahrzeugs auf der Grundlage der Informationen über das Vorhandensein der Drahtlosschlüsselvorrichtung im Fahrzeug; und
Bestimmen der Informationen über das Vorhandensein der Drahtlosschlüsselvorrichtung im Fahrzeug mittels des mindestens einen Sende-/Empfangsmoduls unter Verwendung desselben Drahtloskommunikationsprotokolls.

13. Computerprogramm, das einen Programmcode zum Durchführen mindestens eines der Verfahren nach einem der Ansprüche 11 oder 12 aufweist, wenn das Computerprogramm in einem Computer, einem Prozessor oder einer programmierbaren Hardware-Komponente ausgeführt wird.

## Revendications

1. Dispositif de communication sans fil (10) pour un véhicule (100), le dispositif de communication sans fil comprenant :
au moins un module émetteur-récepteur (12) pour communiquer par l'intermédiaire d'un protocole de communication sans fil ; et
un module de commande (14) configuré pour :
détecter une opération non autorisée du véhicule, et
transmettre un message d'avertissement à au moins une entité à l'extérieur du véhicule par l'intermédiaire de l'au moins un module émetteur-récepteur à l'aide d'un paquet d'annonce du protocole de communication sans fil, dans lequel le paquet d'annonce comprend le message d'avertissement,
dans lequel le module de commande (14) est configuré pour déterminer des informations sur une présence d'un dispositif de clé sans fil à l'intérieur du véhicule à l'aide de l'au moins un module émetteur-récepteur, et
pour détecter l'opération non autorisée du véhicule sur la base des informations sur la présence du dispositif de clé sans fil à l'intérieur du véhicule, et
dans lequel le module de commande (14) est configuré pour déterminer les informations sur la présence du dispositif de clé sans fil à l'intérieur du véhicule par l'intermédiaire de l'au moins un module émetteur-récepteur à l'aide du même protocole de communication sans fil.

2. Dispositif de communication sans fil selon la revendication 1, dans lequel le module de commande (14) est configuré pour déterminer les informations sur la présence du dispositif de clé sans fil à l'intérieur du véhicule par l'intermédiaire de l'au moins un module émetteur-récepteur à l'aide d'un autre protocole de communication sans fil.

3. Dispositif de communication sans fil selon l'une des revendications 1 à 2, dans lequel le module de commande (14) est configuré pour déterminer les informations sur la présence du dispositif de clé sans fil à l'intérieur du véhicule de manière périodique, et/ou dans lequel le module de commande (14) est configuré pour déterminer les informations sur la présence du dispositif de clé sans fil à l'intérieur du véhicule en réponse à une ouverture ou fermeture d'une fenêtre ou porte du véhicule.

4. Dispositif de communication sans fil selon l'une des revendications 1 à 3, le dispositif de communication sans fil étant un protocole de communication sans fil basé sur Bluetooth.

5. Dispositif de communication sans fil selon la revendication 4, dans lequel le protocole de communication sans fil basé sur Bluetooth est un protocole de communication sans fil Bluetooth à basse consommation.

6. Dispositif de communication sans fil selon l'une des revendications 1 à 5, dans lequel le module de commande (14) est configuré pour transmettre le message d'avertissement à l'au moins une entité à l'aide d'un mode de communication longue distance du protocole de communication sans fil.

7. Dispositif de communication sans fil selon la revendication 6, dans lequel le mode de communication longue distance est un mode de communication codé d'un protocole de communication sans fil basé sur Bluetooth.

8. Dispositif de communication sans fil selon l'une des revendications 1 à 7, dans lequel le message d'avertissement comprend des informations d'identification pour identifier le véhicule.

9. Véhicule comprenant le dispositif de communication sans fil selon l'une des revendications 1 à 8.

10. Système de communication sans fil, le système comprenant : un dispositif de communication sans fil (20) pour une entité externe (200), le dispositif de communication sans fil comprenant :
un module récepteur (22) destiné à recevoir des messages sans fil par l'intermédiaire d'un protocole de communication sans fil ; et
un module de commande (24) configuré pour :
recevoir un message d'avertissement en provenance d'un dispositif de communication sans fil d'un véhicule par l'intermédiaire du module récepteur, le message d'avertissement étant reçu par l'intermédiaire d'un paquet d'annonce du protocole de communication sans fil, dans lequel le paquet d'annonce comprend le message d'avertissement, et
fournir une indication associée à une opération non autorisée du véhicule par l'intermédiaire d'un module de sortie sur la base du message d'avertissement reçu,
dans lequel le module de commande (14) est configuré pour déterminer des informations sur une présence d'un dispositif de clé sans fil à l'intérieur du véhicule à l'aide de l'au moins un module émetteur-récepteur, et
pour détecter l'opération non autorisée du véhicule sur la base des informations sur la présence du dispositif de clé sans fil à l'intérieur du véhicule,
dans lequel le module de commande (14) est configuré pour déterminer les informations sur la présence du dispositif de clé sans fil à l'intérieur du véhicule par l'intermédiaire de l'au moins un module émetteur-récepteur à l'aide du même protocole de communication sans fil.

11. Procédé pour un dispositif de communication sans fil (10) d'un véhicule (100), le procédé comprenant :
la détection (110) d'une opération non autorisée du véhicule ;
la transmission (120) d'un message d'avertissement à au moins une entité à l'extérieur du véhicule par l'intermédiaire d'un module émetteur-récepteur à l'aide d'un paquet d'annonce d'un protocole de communication sans fil, dans lequel le paquet d'annonce comprend le message d'avertissement ;
la détermination d'informations sur une présence d'un dispositif de clé sans fil à l'intérieur du véhicule à l'aide de l'au moins un module émetteur-récepteur, et
pour détecter l'opération non autorisée du véhicule sur la base des informations sur la présence du dispositif de clé sans fil à l'intérieur du véhicule ; et
la détermination des informations sur la présence du dispositif de clé sans fil à l'intérieur du véhicule par l'intermédiaire de l'au moins un module émetteur-récepteur à l'aide du même protocole de communication sans fil.

12. Procédé pour un système de communication sans fil comprenant un dispositif de communication sans fil (20) d'une entité externe (200), le procédé comprenant :
la réception (210) d'un message d'avertissement en provenance d'un dispositif de communication sans fil d'un véhicule par l'intermédiaire d'un module récepteur, le message d'avertissement étant reçu par l'intermédiaire d'un paquet d'annonce d'un protocole de communication sans fil, dans lequel le paquet d'annonce comprend le message d'avertissement ; et
la fourniture (220) d'une indication associée à une opération non autorisée du véhicule par l'intermédiaire d'un module de sortie sur la base du message d'avertissement reçu ;
la détermination d'informations sur une présence d'un dispositif de clé sans fil à l'intérieur du véhicule à l'aide de l'au moins un module émetteur-récepteur, et
pour détecter l'opération non autorisée du véhicule sur la base des informations sur la présence du dispositif de clé sans fil à l'intérieur du véhicule ; et
la détermination des informations sur la présence du dispositif de clé sans fil à l'intérieur du véhicule par l'intermédiaire de l'au moins un module émetteur-récepteur à l'aide du même protocole de communication sans fil.

13. Programme informatique ayant un code de programme pour réaliser au moins l'un des procédés selon l'une des revendications 11 ou 12, lorsque le programme informatique est exécuté sur un ordinateur, un processeur, ou un composant matériel programmable.
